# EUROPEAN PATENT SPECIFICATION

(11) **EP 2 505 245 B1**
(45) Date of publication and mention of the grant of the patent: **27.05.2015**
(21) Application number: 10832688.5
(22) Date of filing: 04.11.2010
(51) Int. Cl.: B01D 36/00, B01D 46/00

(54) **FILTRATION EQUIPMENT DESIGNED FOR THE FILTRATION OF USED OR CONTAMINATED FLUIDS AND FILTRATION METHOD FOR USED OR CONTAMINATED FLUIDS**
FILTERUNGSVORRICHTUNG ZUR FILTERUNG ALTER ODER KONTAMINIERTER FLÜSSIGKEITEN UND FILTERUNGSVERFAHREN FÜR ALTE ODER KONTAMINIERTE FLÜSSIGKEITEN
ÉQUIPEMENT DE FILTRATION POUR FILTRER DES FLUIDES UTILISÉS OU CONTAMINÉS ET PROCÉDÉ DE FILTRATION DE FLUIDES UTILISÉS OU CONTAMINÉS

(30) Priority: 26.11.2009 ES 200931070
(43) Date of publication of application: 03.10.2012
(73) Proprietor: Vazquez Montufo, Carlos, 17430 Barcelona (ES); Garcia Soriano, Clemente, 08319 Can Massuet del Far,Dosrius (Barcelona) (DE)
(72) Inventor: Vazquez Montufo, Carlos, 17430 Barcelona (ES); Garcia Soriano, Clemente, 08319 Can Massuet del Far,Dosrius (Barcelona) (DE)
(74) Representative: Isern-Jara, Nuria
(86) International application number: PCT/ES2010/070714
(87) International publication number: WO 2011/064427

(56) References cited:
- ES-A1- 2 046 944
- ES-T3- 2 027 423
- ES-U- 1 068 752
- KR-B1- 100 761 971
- US-A- 4 747 920
- US-A- 5 626 767
- US-A1- 2006 037 916
- US-B1- 6 221 255

## Description

### OBJECT OF THE INVENTION

The aim of this invention patent application is to register filtration equipment for filtering vegetable oil and other used, generally contaminated fluids, as well as a filtration method that incorporates significant innovations and advantages.

More specifically, the invention relates to filtration equipment designed to filter used cooking oil and other generally contaminated fluids, which comprises a filtration device connected to an inlet for the fluid to be treated and at least one outlet for the treated fluid where an ultrasonic generator is used for the treatment of contaminated fluid to be recovered or recycled.

### BACKGROUND OF THE INVENTION

Taking used vegetable oil as an example of the application of the equipment of the invention and the process it performs, the large volume of cooking oil used by catering establishments and the financial cost involved are well-known, and restaurateurs try to reuse oil to prolong its life as much as possible.

In practice, restaurateurs use the colour and quantity of smoke produced by the oil, as well as the colour of food cooked in it, to determine the quality grade of the oil.

A well-known way of lengthening the life of oil is to use additives to prevent the oxidation and degradation of the oil; however, this method is dangerous because, although the colour does not vary greatly, polar compounds and polycyclic aromatic hydrocarbons, such as benzopyrene, are maintained or even increase, and these are highly carcinogenic compounds.

Another solution is to replace oil as the level goes down in, for example, the fryer, without having previously treated the used oil, in such a way that the new oil degrades more rapidly due to the presence of the compounds in the used oil.

For the re-use of oil, there are known systems and equipment that seek to filter the cooking oil of the type used in fryers equipped with filters made from, for example, wire mesh, fabric or metal with activated carbon, which have a suction pump from the oil to the fryer and which incorporate a receptacle for the oil that is to be filtered and/or has already been filtered. However, this known equipment is expensive and does not offer as great a degree of filtration as is desired since it is unable to capture very small particles, such as bacteria.

The application for Spanish Utility Model no. ES 1068752 describes a cooking oil filter for removing particles and impurities, and whose common features form part of the preamble of the first claim.

It is known from US-A-6221255 a system wherein an ultrasound emitter, or gun, is provided which emits an ultrasound beam directed at filter media, in order to knock the solids from the filter media. An attenuation barrier is needed to defuse beam in order to not damage the filter media. That document does not disclose any means suitable for regulating and controlling the operating conditions of ultrasound beams while the equipment is functioning.

### DESCRIPTION OF THE INVENTION

The present invention has been developed to provide filtration equipment designed to filter contaminated or used fluids to overcome the aforementioned drawbacks, providing further additional advantages which will become apparent from the description below.

It is, therefore, an object of the present invention to provide filtration equipment designed to filter a contaminated or used fluid, such as used cooking oil, as disclosed in independent claim 1.

Thanks to these characteristics, it can eliminate not only solid particles of different sizes for the re-use of the previously used fluid, but also eliminate biological pathogens (germs, bacteria, fungi, etc.), which are formed during the utilisation of fluids for culinary uses (vegetable oils, water, wines, liquors, etc.), that is to say, the sterilisation thereof due to the presence of an ultrasonic transducer plate. Another no less important advantage of the equipment of the invention is the fact that it can work with fluids across the whole range of temperatures, whether because standard for the work or process or because of the needs of the recovery process itself, such as, for example, maintaining frying temperature (170°C) without need to stop the operation of attached equipment, such as a fryer in the case of vegetable oil. Consequently, there is no need to stop the fryer from operating nor to waste time because the treated oil does not need to be reheated.

The elimination of pathogens is due to the cavitation effect produced, which destroys the cell walls of microbes, viruses and bacteria, disabling their reproductive cycle. Similarly, the cavitation effect generated by ultrasound prevents clogging or plugging of the equipment's main filter enabling a constant flow of the fluid to be processed.

The propagation velocity of ultrasounds varies dependent on the viscosity, temperature and rheology of the liquid to be processed. It is for this reason that working with hot oil enhances the effectiveness of the sonication process (effect of using ultrasounds on a liquid, solid or gaseous product).

Advantageously, the chamber can have a coating of Duro-chrome, to enable it to withstand the ultrasonic waves generated inside the chamber.

The controller is equipped with a potentiometer and a display screen which shows the operating parameters. The arrangement of the potentiometer allows for variation of the frequency spectrum of the ultrasonic transducers. Thus, being able to modify the operating frequency facilitates working with the different types of fluids or oils used, for example in frying, since each oil has an optimal standard frequency.

The chamber includes a secondary filtration device located before the outlet. Preferably, said secondary filtration device has a first stainless steel mesh filter, a second activated carbon filter, a third cellulose/silica filter and a fourth polyester filter. Thus, the presence of an activated carbon filter enables the removal of polar compounds and benzopyrenes.

Optionally, the filtration equipment can comprise a platform equipped with transport wheels on which are housed the various parts that make up the filtration equipment so that it can be transported easily and quickly by hand.

Another object of the present invention is to provide a filtration method for used or contaminated fluids according to independent claim 11.

Other features and advantages of the filtration equipment that is the object of the present invention will become apparent from the description of a preferred, although not exclusive, embodiment, which is illustrated by way of a non-limiting example in the accompanying drawings, in which:

### BRIEF DESCRIPTION OF THE DRAWINGS

Figure 1. - Diagram corresponding to filtration equipment in accordance with the present invention; and
Figure 2. - Schematic view of the secondary filtration device;
Figure 3. - Schematic elevation view of an installation with the filtration equipment of the invention;
Figure 4. - Plan view of the installation shown in the previous figure.

### DESCRIPTION OF A PREFERRED EMBODIMENT

The accompanying drawings show filtration equipment designed for filtering used cooking oil (although it can be applied to other generally contaminated fluids), for example from fryers for cooking food in the case of vegetable oil, and comprising a filtration device which is described below, connected to an inlet 1 for oil to be treated and an outlet for treated oil 2 equipped with an outlet valve.

The filtration device comprises a chamber 3, for example, with a useful capacity of one litre, equipped with ultrasonic transducers 4 of a known type available on the market which enable complete sterilisation of the oil. These ultrasonic transducers 4 are located inside a fluid-tight boxes located to the side of the chamber. These are connected to a controller 5 for adjustment by an operator, triggering a sonication process of the oil to be treated which is stored inside the chamber 3.

The controller 5 is equipped with a potentiometer and a display screen which shows the operating parameters, with the display screen being, for example, LCD type permitting the adjustment of the various operating parameters to special conditions.

To move the oil to be treated between the various parts through which it passes, a pressure pump 6 of conventional type is used.

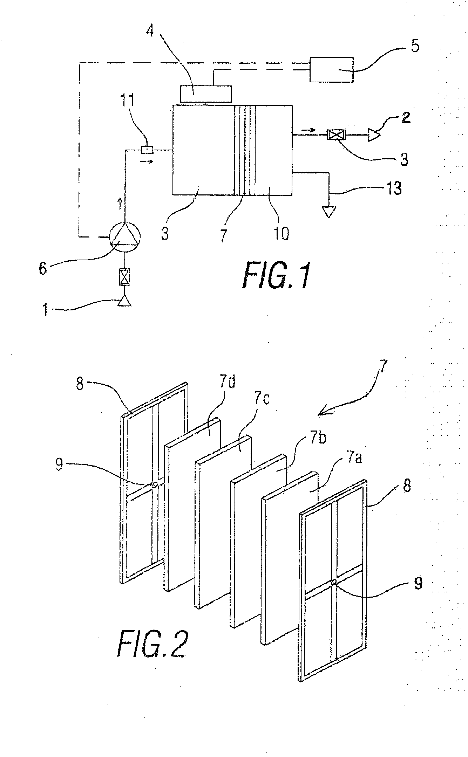

The chamber 3 also includes a secondary filtration device 7 (shown schematically in greater detail in Figure 2), of a detachable type, located in front of the outlet 2, which contains a first stainless steel mesh filter 7a, a second activated carbon filter 7b, for example embedded, 60% by weight, with a pore size of 0.2 microns, in a third cellulose/silica filter 7c and a fourth polyester filter 7d, with said filters joined together via a stainless steel peripheral frame with a central mounting. The activated carbon filter is responsible for absorbing the benzopyrene and and performs a precoalescence of the oil so it will also absorb the occluded water and polar compounds in the oil, leaving it free from contaminants and pathogens. The activated carbon filter may have a thickness of approximately 5 cm, since the speed of the oil should not be very high and it will spend sufficient time passing through said activated carbon filter, thereby eliminating the contaminating compounds. This secondary filtration device 7 includes a two-part surrounding peripheral frame fixed by means of a pivot pin passing through a central hole 9.

After the passage of oil through the secondary filtration device, the oil flow passes into a further chamber 10 which is in fluid communication with the chamber 3 above. This additional chamber 10 is connected to the outlet 2 and to a drain 13.

The equipment also has a thermometer 11 (with a control range of 0°-200°C) located at a crossing point of the oil to be treated, and more specifically installed after a control valve for the inflow and outflow of oil to be treated contiguous to the chamber.

It will be apparent to one skilled in the art that the described filtration equipment will have other necessary elements that are not shown such as, for example, flow control valves, manometers, pressure control, connecting conduits for the passage of oil to be treated, mountings, etc.

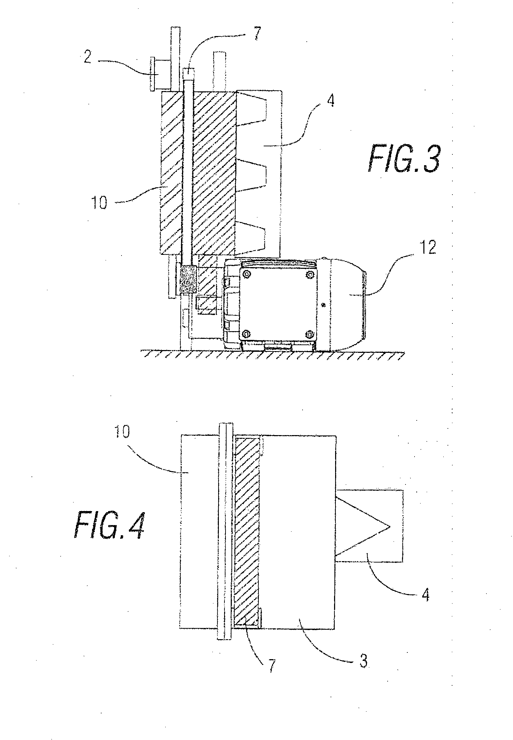

In the installation shown in Figures 3 and 4, there is a storage tank 12 which stores the oil to be treated.

Finally, in an embodiment not shown, the filtration equipment can be placed on a wheeled platform by way of a trolley with dimensions that enable it to be moved around manually.

The details, forms, dimensions and other fixtures, as well as the materials used in the manufacture of the filtration equipment of the invention may be substituted as appropriate by others that are technically equivalent and do not depart from the essence of the invention or from the scope defined by the claims below.

## Claims

1. Filtration equipment designed for filtering used or contaminated fluids, comprising a filtration device connected to an inlet (1) for the fluid to be treated and at least one outlet (2) for the treated fluid, said device comprising a filtration chamber (3) provided with means for generating ultrasounds triggering a process that comprises the sonication of the fluid to be treated stored inside the chamber (3), including said chamber (3) a secondary filtration device (7) located in front of the outlet, said means for generating ultrasounds being able to create a cavitation effect, preventing the clogging or plugging of said secondary filtration device (7); comprising the means for ultrasound generation ultrasonic transducers (4) connected to a controller (5), **characterised in that** the controller (5) is equipped with a potentiometer and a display screen that shows the operating parameters.

2. Filtration equipment in accordance with claim 1, **characterised by** the fact that the interior of the chamber (3) has a Duro-chrome coating.

3. Filtration equipment in accordance with claim 1, **characterised by** the fact that said secondary filtration device (7) has a first stainless steel mesh filter, a second activated carbon filter, a third cellulose/silica filter and a fourth polyester filter.

4. Filtration equipment in accordance with claim 3, **characterised by** the fact that each filter is equipped with a stainless steel mesh.

5. Filtration equipment in accordance with claim 3, **characterised by** the fact that the filters that form part of the secondary filtration device (7) are linked together via a surrounding perimeter frame (8).

6. Filtration equipment in accordance with claim 1, **characterised by** the fact that the ultrasonic transducers (4) are located within a fluid-tight box.

7. Filtration equipment in accordance with claim 1, **characterised by** the fact that it uses a pressure pump (6) for driving the fluid to be treated from the inlet (1) towards at least one of the outlets (2).

8. Filtration equipment in accordance with claim 1, **characterised by** the fact that it includes a thermometer (11) located at a crossing point of the oil to be treated.

9. Filtration equipment in accordance with claim 1, **characterised by** the fact that it includes an additional chamber (10) in fluid communication with the chamber (3) where the sonication process takes place, wherein the outlet is located and which stores the liquid that has passed through the chamber and the secondary filtration device (7).

10. Filtration equipment in accordance with claim 1, **characterised by** the fact that it includes a platform giving support to the filtration device, which is equipped with transport wheels.

11. Filtration procedure for used or contaminated fluids, **characterized by** the fact that a flow of fluid to be treated is passed through a chamber provided with means for generating ultrasounds, wherein a sonication process takes place, then the flow of fluid passes through a plurality of mesh filters included in said chamber, avoiding clogging or plugging of said plurality of mesh filters by using a cavitation effect generated by the means for generating ultrasounds and maintaining a constant flow of filtered fluid.

## Patentansprüche

1. Filterungsausrüstung zur Filterung gebrauchter oder kontaminierter Flüssigkeiten, umfassend eine Filterungsvorrichtung, die an einen Einlauf (1) für die zu behandelnde Flüssigkeit und zumindest einen Auslauf (2) für die behandelte Flüssigkeit angeschlossen ist, wobei die besagte Vorrichtung eine Filterungskammer (3) umfasst, die mit Mitteln ausgestattet ist, um Ultraschall zu erzeugen, und damit einen Prozess auszulösen, der die Ultraschallbehandlung der in der Kammer (3) befindlichen zu behandelnden Flüssigkeit umfasst, wobei die besagte Kammer (3) eine sekundäre Filterungsvorrichtung (7) einschliesst, die vor dem Auslauf angeordnet ist, wobei die besagten Mittel zur Erzeugung von Ultraschall dazu befähigt sind, eine Kavitationswirkung zu erzielen, wobei sie die Blockierung oder Verstopfung der besagten sekundären Filterungsvorrichtung (7) verhindern; wobei die Mittel zur Erzeugung von Ultraschall Ultraschallschwinger (4) umfassen, die an eine Steuereinheit (5) angeschlossen sind, **dadurch gekennzeichnet, dass** die Steuereinheit (5) mit einem Potenziometer und einem Anzeigebildschirm augestattet ist, welcher die Betriebswerte anzeigt.

2. Filterungsausrüstung gemäss Anspruch 1, **dadurch gekennzeichnet, dass** das Innere der Kammer (3) eine Beschichtung aus Duro-chrome aufweist.

3. Filterungsausrüstung gemäss Anspruch 1, **dadurch gekennzeichnet, dass** die besagte sekundäre Filterungsvorrichtung (7) einen ersten Siebfilter aus Edelstahl, einen zweiten Filter aus Aktivkohle, einen dritten Filter aus Zellulose/Silika und einen vierten Filter aus Polyester aufweist.

4. Filterungsausrüstung gemäss Anspruch 3, **dadurch gekennzeichnet, dass** jeder Filter mit Edelstahlmaschen ausgerüstet ist.

5. Filterungsausrüstung gemäss Anspruch 3, **dadurch gekennzeichnet, dass** die Filter, die Teil der sekundären Filterungsvorrichtung (7) sind, durch einen sie umgebenden Umfangsrahmen (8) miteinander verbunden sind.

6. Filterungsausrüstung gemäss Anspruch 1, **dadurch gekennzeichnet, dass** die Ultraschallschwinger (4) in einem gegen Flüssigkeit dichten Gehäuse angeordnet sind.

7. Filterungsausrüstung gemäss Anspruch 1, **dadurch gekennzeichnet, dass** sie eine Druckpumpe (6) verwendet, um die zu behandelnde Flüssigkeit vom Einlauf (1) in Richtung von mindestens einem der Ausläufe (2) zu befördern.

8. Filterungsausrüstung gemäss Anspruch 1, **dadurch gekennzeichnet, dass** sie ein Thermometer (11) umfasst, welches sich an einem Kreuzungspunkt des zu behandelnden Öles befindet.

9. Filterungsausrüstung gemäss Anspruch 1, **dadurch gekennzeichnet, dass** sie eine zusätzliche Kammer (10) in Fluidverbindung mit der Kammer (3) aufweist, in welcher die Ultraschallbehandlung durchgeführt wird, in welcher der Auslauf angeordnet ist und in welcher die Flüssigkeit gelagert ist, die durch die Kammer und die sekundäre Filterungsvorrichtung (7) hindurch geleitet wurde.

10. Filterungsausrüstung gemäss Anspruch 1, **dadurch gekennzeichnet, dass** sie eine die Filterungsvorrichtung unterstützende Plattform aufweist, die mit Transporträdern ausgestattet ist.

11. Filterungsverfahren für gebrauchte oder kontaminierte Flüssigkeiten, **dadurch gekennzeichnet, dass** ein Strom der zu behandelnden Flüssigkeit durch eine Kammer hindurch geleitet wird, die mit Mitteln ausgestattet ist, um Ultraschall zu erzeugen und in welcher eine Ultraschallbehandlung durchgeführt wird, dann der Strom der Flüssigkeit durch eine Vielzahl von in dieser Kammer angeordneten Siebfiltern hindurch geleitet wird, wobei die Blockierung oder Verstopfung der besagten Vielzahl von Siebfiltern verhindert wird, indem eine Kavitationswirkung verwendet wird, die von den Mitteln zur Erzeugung von Ultraschall erzeugt wird, und ein konstanter Strom gefilterter Flüssigkeit aufrecht erhalten wird.

## Revendications

1. Equipement de filtration pour filtrer des fluides utilisés ou contaminés, comprenant un dispositif de filtration connecté à une entrée (1) pour le fluide à être traité et au moins une sortie (2) pour le fluide traité, dans lequel ledit dispositif comprend une chambre de filtration (3) pourvue d'un moyen pour générer des ultrasons, qui active un processus comprenant un traitement par ultrasons du fluide à être traité, entreposé dans cette chambre (3), dans lequel cette chambre (3) comprend un dispositif de filtration secondaire (7) situé en avant de la sortie, dans lequel ledit moyen pour générer des ultrasons est capable de créer un effet de cavitation, en empêchant l'obstruction ou le colmatage dudit dispositif de filtration secondaire (7); dans lequel le moyen pour générer des ultrasons comprend des transducteurs à ultrason (4) connectés à une unité de contrôle (5), **caractérisé en ce que** l'unité de contrôle (5) est équipée d'un potentiomètre et d'un écran d'affichage qui montre les paramètres de l'opération.

2. Equipement de filtration selon la revendication 1, **caractérisé en ce que** l'intérieur de la chambre (3) a un revêtement en Duro-chrome.

3. Equipement de filtration selon la revendication 1, **caractérisé en ce que** ledit dispositif de filtration secondaire (7) présente un premier filtre à maille en acier inoxydable, un deuxième filtre en charbon activé, un troisième filtre en cellulose/silice et un quatrième filtre en polyester.

4. Equipement de filtration selon la revendication 3, **caractérisé en ce que** chaque filtre est pourvu d'une maille en acier inoxydable.

5. Equipement de filtration selon la revendication 3, **caractérisé en ce que** les filtres qui font partie du dispositif de filtration secondaire (7) sont liés les uns aux autres à travers d'un cadre en périphérique (8) qui les entoure.

6. Equipement de filtration selon la revendication 1, **caractérisé en ce que** les transducteurs à ultrason (4) sont situés à l'intérieur d'une boîte étanche aux fluides.

7. Equipement de filtration selon la revendication 1, **caractérisé en ce qu'**il utilise une pompe à pression (6) afin de conduire le fluide à être traité en partant de l'entrée (1) vers au moins une des sorties (2).

8. Equipement de filtration selon la revendication 1, **caractérisé en ce qu'**il inclut un thermomètre (11) situé au point de passage de l'huile à être traitée.

9. Equipement de filtration selon la revendication 1, **caractérisé en ce qu'**il inclut une chambre additionnelle (10) en communication de fluide avec la chambre (3) dans laquelle le processus du traitement par ultrasons se réalise, dans laquelle se trouve la sortie, et dans laquelle est entreposé le liquide qui a passé à travers la chambre et le dispositif de filtration secondaire (7).

10. Equipement de filtration selon la revendication 1, **caractérisé en ce qu'**il comprend une plateforme qui donne support au dispositif de filtration, qui est pourvue de roues de transport.

11. Procédure de filtration des fluides utilisés ou contaminés, **caractérisée en ce que** un courant du fluide à être traité est conduit à travers d'une chambre pourvue d'un moyen pour générer des ultrasons, dans laquelle un processus de traitement par ultrasons a lieu, et après le courant du fluide passe à travers une pluralité de filtres à maille qui se trouvent dans cette chambre, en évitant l'obstruction ou le colmatage de cette pluralité de filtres à maille en utilisant un effet de cavitation généré par le moyen pour générer des ultrasons, et en maintenant un courant constant du fluide filtré.
